# EUROPEAN PATENT SPECIFICATION

(11) **EP 3 145 218 B1**
(45) Date of publication and mention of the grant of the patent: **05.09.2018**
(21) Application number: 16161860.8
(22) Date of filing: 23.03.2016
(51) Int. Cl.: H04R 25/00, H04W 4/00

(54) **HEARING AID COMMUNICATION SYSTEM AND HEARING AID COMMUNICATION METHOD THEREOF**
HÖRGERÄTEKOMMUNIKATIONSSYSTEM UND HÖRGERÄTEKOMMUNIKATIONSVERFAHREN DAFÜR
SYSTÈME DE COMMUNICATION DE PROTHÈSE AUDITIVE ET PROCÉDÉ DE COMMUNICATION DE PROTHÈSE AUDITIVE ASSOCIÉ

(30) Priority: 21.09.2015 TW 104131191
(43) Date of publication of application: 22.03.2017
(73) Proprietor: UNLIMITER MFA CO., LTD., Eden Island (SC)
(72) Inventor: CHAO, Kuan-Li, 106 Taipei (TW); YANG, Kuo-Ping, 106 Taipei (TW)
(74) Representative: Altenburg, Bernardus Stephanus Franciscus

(56) References cited:
- WO-A1-2014/054215
- US-A1- 2014 270 287

## Description

### BACKGROUND OF THE INVENTION

### Field of the Invention

The present invention relates to a hearing aid communication system and a hearing aid communication method thereof; more particularly, the present invention relates to a hearing aid communication system and a hearing aid communication method thereof for maintaining or breaking a connection automatically.

### Description of the Related Art

As technology develops, so do aids for disabled persons, such as hearing aids for assisting hearing-impaired persons. In the prior art, a new hearing aid has been developed to reinforce sound signals transmitted using the Bluetooth protocol, whereby the hearing-impaired person can hear sounds from a mobile phone or television directly. However, when the hearing aid for assisting a hearing-impaired person establishes a connection with the sound-providing apparatus, the connection status will be maintained. Even if the sound-providing apparatus does not generate a sound signal, the hearing aid will maintain the connection with the sound-providing apparatus continuously. As a result, the hearing aid will broadcast the sound from the sound-providing apparatus; i.e., silence. It is inconvenient to the hearing-impaired person.

Therefore, it is necessary to invent a new hearing aid communication system and a hearing aid communication method thereof to mitigate and/or obviate the aforementioned problems.

WO 2014/054215 A1 discloses a unit for connecting a sound-providing apparatus, e.g. a TV set, to a hearing aid via a wireless link, e.g. Bluetooth.

US 2014/270287 A1 relates to a hearing aid having a bi-directional wireless link to a to remote device, e.g. a mobile phone.

### SUMMARY OF THE INVENTION

It is an object of the present invention to provide a hearing aid communication system for maintaining or breaking a connection automatically.

It is another object of the present invention to provide a hearing aid communication method applied to the abovementioned hearing aid communication system.

To achieve the abovementioned object, the hearing aid communication system of the present invention is f or allowing a hearing aid to receive a sound signal from a sound-providing apparatus. The sound-providing apparatus has a digital signal transmitting port. The hearing aid communication system comprises a digital signal receiving port, a wireless transmission module, a decoding module, and a processing module. The digital signal receiving port is electrically connected to the digital signal transmitting port of the sound-providing apparatus for receiving a sound signal from the sound-providing apparatus. The wireless transmission module connects to the hearing aid via a wireless communication path. The processing module is electrically connected to the digital signal receiving port and the wireless transmission module for determine whether the sound-providing apparatus is providing a sound signal, wherein when the sound-providing apparatus is providing the sound signal, the processing module controls the wireless transmission module to establish a connection with the hearing aid, and when the processing module determines that the sound-providing apparatus has stopped providing a sound signal, the processing module controls the wireless transmission module to break the connection with the hearing aid.

The hearing aid communication method comprises the following steps: determining whether the sound-providing apparatus is providing a sound signal; when the sound-providing apparatus is providing a sound signal, establishing a connection with the hearing aid; receiving the sound signal from the sound-providing apparatus for transmission to the hearing aid; and when the sound-providing apparatus stops providing a sound signal, breaking the connection with the hearing aid.

Other objects, advantages, and novel features of the invention will become more apparent from the following detailed description when taken in conjunction with the accompanying drawings.

### BRIEF DESCRIPTION OF THE DRAWINGS

These and other objects and advantages of the present application will become apparent from the following description of the accompanying drawings, which disclose several embodiments of the present application. It is to be understood that the drawings are to be used for purposes of illustration only, and not as a definition of the invention.

In the drawings, wherein similar reference numerals denote similar elements throughout the several views:
FIG. 1 illustrates a structural drawing of the hearing aid communication system of the present invention.
FIG. 2 illustrates a flowchart of the hearing aid communication method of the present invention.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

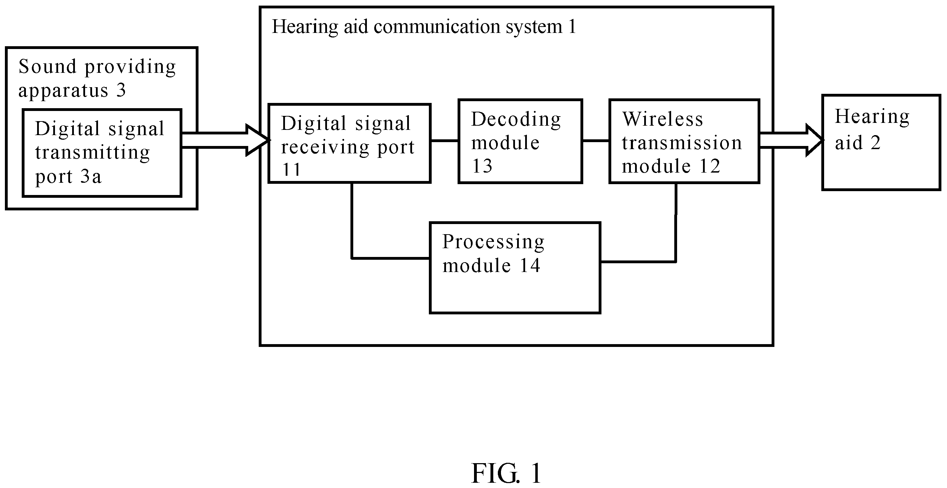

Please refer to FIG. 1, which illustrates a structural drawing of the hearing aid communication system of the present invention.

The hearing aid communication system 1 of the present invention is used for connecting to a sound-providing apparatus 3 and allowing a hearing aid 2 to receive a sound signal from the sound-providing apparatus 3. The hearing aid 2 can receive an external sound signal and then enlarge and filter the external sound signal for provision to a hearing-impaired person. Because the function of the hearing aid 2 is not the key element of the present invention and has been widely applied by those skilled in the art related to the present invention, there is no need for further description. The sound-providing apparatus 3 can be a television or other audio and video player, but the present invention is not limited to these apparatuses. The sound-providing apparatus 3 has a digital signal transmitting port 3a used for transmitting a sound signal with a digital signal format to another external device; e.g., audio equipment.

The hearing aid communication system 1 comprises a digital signal receiving port 11, a wireless transmission module 12, a decoding module 13, and a processing module 14. The digital signal receiving port 11 is electrically connected to the corresponding digital signal transmitting port 3a disposed in the sound-providing apparatus 3 to receive a sound signal from the sound-providing apparatus 3. The sound signal is transmitted in a digital format. When the sound-providing apparatus 3 is working normally, the digital sound signal will be transmitted via the digital signal transmitting port 3a continuously. The digital signal receiving port 11 and the digital signal transmitting port 3a of the sound-providing apparatus 3 can be a S/PDIF (Sony/Philips Digital Interface Format) port which is capable of establishing or breaking the connection automatically when the sound-providing apparatus 3 turns on or turns off. When the S/PDIF port is used, better acoustic fidelity can be generated without setting a best output volume of the sound-providing apparatus 3. But the hearing aid communication system 1 of present invention is not limited to the S/PDIF port. The wireless transmission module 12 has a wireless communication function for connecting to the hearing aid 2 via a wireless communication path, wherein the hearing aid 2 has the same wireless communication function, too. In one embodiment of the present invention, the wireless communication path can be a Bluetooth protocol, but the present invention is not limited to this wireless communication mode.

The decoding module 13 can be a decoding chip and can be electrically connected to the digital signal receiving port 11 for decoding a digital sound signal that has been encoded, encrypted, or compressed into a general uncompressed digital sound signal format. Because the decoding technology is not the key element of the present invention and has been widely applied by those skilled in the art related to the present invention, there is no need for further description. Furthermore, the digital signal receiving port 11 may receive the uncompressed digital sound signal format directly. Thus, in one embodiment of the present invention, the sound signal can be processed without the decoding module 13. The processing module 14 is electrically connected to the digital signal receiving port 11 and the wireless transmission module 12 for determining whether the sound-providing apparatus 3 provides a sound signal. When the sound-providing apparatus 3 is providing a sound signal, the processing module 14 controls the wireless transmission module 12 to establish the connection with the hearing aid 2 so that the decoded sound signal can be transmitted to the hearing aid 2. As a result, the hearing aid 2 can establish a connection with the sound-providing apparatus 3 when the sound-providing apparatus 3 begins providing a sound signal. In addition, when the sound-providing apparatus 3 is providing a sound signal continuously, the processing module 14 controls the wi-wireless transmission module 12 to maintain the connection with the hearing aid 2. Furthermore, when the processing module 14 determines that the sound-providing apparatus 3 is not providing a sound signal, the processing module 14 controls the wireless transmission module 12 to break the connection with the hearing aid 2.

In one embodiment of the present invention, one situation in which the processing module 14 determines the sound-providing apparatus 3 does not provide sound can be that the sound-providing apparatus 3 provides silence. Therefore, when the sound-providing apparatus 3 provides silence for a specific length of time, e.g., 3 seconds or 10 seconds, the processing module 14 controls the wireless transmission module 12 to break the connection with the hearing aid 2. In another embodiment of the present invention, another situation in which the processing module 14 determines that the sound-providing apparatus 3 does not provide a sound signal is that the digital sound signal cannot be received from the sound-providing apparatus 3. In general, the analogue signal cannot distinguish between a silent section of the signal and no signal. However, the digital signal generally has signal flags or package flags at the beginning and end. In addition, a digital signal is usually encrypted or compressed. Therefore, there is a signal even when silence is transmitted. Furthermore, there is also a reference clock when a digital signal is transmitted. If no digital signal is generated, no reference clock will be detected, either. As a result, the present invention can determine whether the sound-providing apparatus 3 is still working according to the digital sound signal. As a result, whether the sound-providing apparatus 3 provides a digital sound signal with sound or one of silence, the hearing aid 2 will maintain the connection. When a short silent signal is received, the hearing aid 2 will not break the connection easily, as the sound-providing apparatus 3 is functioning. On the other hand, when the sound-providing apparatus 3 is not providing a digital sound signal, the processing module 14 will control the wireless transmission module 12 to break the connection with the hearing aid 2. Please note that the processing module 14 is capable of considering the abovementioned two embodiments: The processing module 14 controls the wireless transmission module 12 to break the connection with the hearing aid 2 when the sound-providing apparatus 3 does 3 does not provide a digital sound signal or provides silence for a specific length of time.

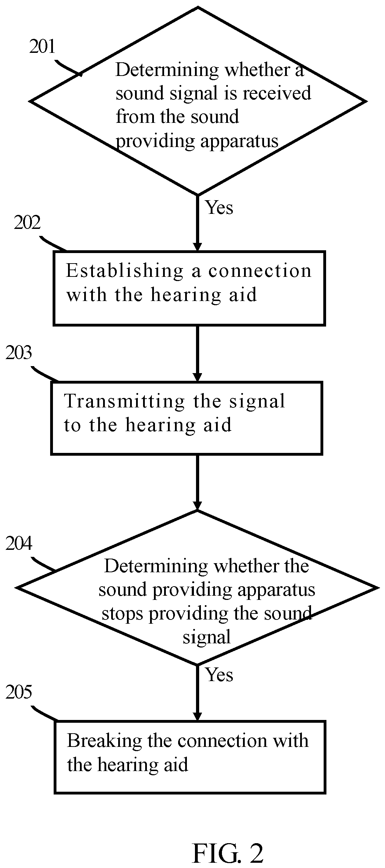

Please refer to FIG. 2, which illustrates a flowchart of the hearing aid communication method of the present invention.

First, the digital signal receiving port 11 is electrically connected to a corresponding digital signal transmitting port 3a of a sound-providing apparatus 3. Thus the processing module 14 is used for determining whether a sound signal is received from the sound-providing apparatus 3.

If the sound-providing apparatus 3 provides a sound signal, then Step 202 is executed: establishing a connection with the hearing aid.

When the sound-providing apparatus 3 is providing a sound signal, the processing module 14 will control the wireless transmission module 12 to establish a connection with the hearing aid 2. Thus the hearing aid 2 can establish a connection with the wireless transmission module 12 to transmit the signal via a wireless communication path; e.g., a Bluetooth protocol.

Then Step 203 is executed: transmitting the sound signal to the hearing aid.

Then the decoding module 13 can decode the encoded, encrypted, or compressed sound signal that is received from the digital signal receiving port 11 into a general uncompressed digital sound signal format. The processing module 14 then transmits the sound signal to the hearing aid 2 via the wireless transmission module 12. Thus, the hearing aid 2 can establish a connection with the sound-providing apparatus 3 immediately when the sound-providing apparatus 3 starts providing a sound signal. In one embodiment of the present invention, when the sound-providing apparatus 3 is providing a digital sound signal continuously, the processing module 14 controls the wireless transmission module 12 to maintain the connection with the hearing aid 2. The processing module 14 does not break the connection arbitrarily.

Then Step 204 is executed: determining whether the sound-providing apparatus has stopped providing a sound signal.

Then the processing module 14 determines whether the sound-providing apparatus 3 has stopped providing a sound signal. For example, when the processing module 14 determines that the sound-providing apparatus 3 has provided silence for a specific length of time or determines that the sound-providing apparatus 3 is not providing a digital sound signal, the processing module 14 will determine that the sound-providing apparatus 3 has stopped providing a sound signal.

Finally, if the processing module 14 determines that the sound-providing apparatus 3 has stopped providing a sound signal in Step 204, then Step 205 is executed: breaking the connection with the hearing aid.

When the processing module 14 determines that the digital sound signal cannot be received from the sound-providing apparatus 3 or the sound-providing apparatus 3 has provided silence for a specific length of time, the processing module 14 controls the wireless transmission module 12 to break the connection with the hearing aid 2. After Step 205, Step 201 can be executed again to allow the processing module 14 to determine whether the sound-providing apparatus 3 is providing a digital sound signal.

It is to be known that the step order of the hearing aid communication method of the present invention is not limited to the above-mentioned description and that the abovementioned step order can be changed as long as the object of the present invention can be achieved.

As a result, the present invention allows the hearing-impaired person to hear the sound from the sound-providing apparatus 3 conveniently and maintain the connection with the hearing aid 2. The hearing aid communication system 1 will not arbitrarily determine that the sound-providing apparatus 3 is not functioning and break the connection with the sound-providing apparatus 3 easily when a silent signal is provided.

It is noted that the above-mentioned embodiments are only for illustration. It is intended that the present invention cover modifications and variations of this invention provided they fall within the scope of the following claims. Therefore, it will be apparent to those skilled in the art that various modifications and variations can be made to the structure of the present invention without departing from the scope of the invention.

## Claims

1. A hearing aid communication system (1), for connecting between a hearing aid (2) and a sound-providing apparatus (3), wherein the sound-providing apparatus (3) has a digital signal transmitting port (3a), the hearing aid communication system (1) comprising:
a digital signal receiving port (11), electrically connected to the digital signal transmitting port (3a) of the sound-providing apparatus (3), for receiving a sound signal from the sound-providing apparatus (3);
a wireless transmission module (12) for connecting to the hearing aid (2) via a wireless communication path; and
a processing module (14), electrically connected to the digital signal receiving port (11) and the wireless transmission module (12), for determining whether the sound-providing apparatus (3) is providing the sound signal, wherein when the sound-providing apparatus (3) is providing the sound signal, the processing module (14) controls the wireless transmission module (12) to establish a connection with the hearing aid (2); when the processing module (14) determines that the sound-providing apparatus (3) has stopped providing the sound signal, the processing module (14) controls the wireless transmission module (12) to break the connection with the hearing aid (2).

2. The hearing aid communication system (1) as claimed in Claim 1, wherein in case the hearing aid (2) cannot receive a digital sound signal from the sound-providing apparatus (3); the processing module (14) is capable of controlling the wireless transmission module (12) to break the connection with the hearing aid (2).

3. The hearing aid communication system (1) as claimed in Claim 1 or 2, wherein in case the sound-providing apparatus (3) provides silence for a specific length of time; thus, the processing module (14) is capable of controlling the wireless transmission module (12) to break the connection with the hearing aid (2).

4. The hearing aid communication system (1) as claimed in Claim 1 or any of the claims 2 to 3, the hearing aid communication system (1) further comprising a decoding module (13) electrically connected to the digital signal receiving port (11) and for decoding the sound signal into an uncompressed digital sound signal format.

5. The hearing aid communication system (1) as claimed in Claim 1 or any of the claims 2 to 4, wherein when the sound-providing apparatus (3) is providing the sound signal continuously, the processing module (14) controls the wireless transmission module (12) to maintain the connection with the hearing aid (2).

6. The hearing aid communication system (1) as claimed in claim 1 or any of the claims 2 to 5, wherein the wireless transmission module (12) connects to the hearing aid (2) via a Bluetooth protocol.

7. The hearing aid communication system (1) as claimed in claim 1 or any of the claims 2 to 6, wherein the digital signal receiving port (11) is a S/PDIF port.

8. A hearing aid communication method, for allowing a hearing aid (2) to receive a sound signal from a sound-providing apparatus (3), the method comprising:
determining whether the sound-providing apparatus (3) is providing a sound signal;
when the sound-providing apparatus (3) is providing the digital sound signal, establishing a connection with the hearing aid (2);
receiving the sound signal from the sound-providing apparatus (3) for transmission to the hearing aid (2); and
when the sound-providing apparatus (3) stops providing the sound signal, breaking the connection with the hearing aid (2).

9. The hearing aid communication method as claimed in Claim 8, wherein the step of stopping the provision of the sound signal from the sound-providing apparatus (3) further comprises:
determining that the hearing aid (2) is not receiving a digital sound signal from the sound-providing apparatus (3) ; and controlling the wireless transmission module (12) to break the connection with the hearing aid (2).

10. The hearing aid communication method as claimed in Claim 8 or 9, wherein the step of stopping providing the sound signal from the sound-providing apparatus (3) further comprises: determining that the sound-providing apparatus (3) has provided silence for a specific length of time; and controlling the wireless transmission module (12) to break the connection with the hearing aid (2).

11. The hearing aid communication method as claimed in any of the claims Claim 8, 9, and 10, further comprising a step of decoding the sound signal into an uncompressed digital sound signal format.

12. The hearing aid communication method as claimed in Claim 8, further comprising a step of maintaining the connection with the hearing aid (2) when the sound-providing apparatus (3) is providing the sound signal continuously.

13. The hearing aid communication method as claimed in Claim 8, further comprising a step of connecting to the hearing aid (2) via a Bluetooth protocol.

## Patentansprüche

1. Hörgeräte-Kommunikationssystem (1) zum Anschließen zwischen einem Hörgerät (2) und einem Tonbereitstellungsgerät (3), wobei das Tonbereitstellungsgerät (3) einen Digitalsignal-Sendeanschluss (3a) hat und das Hörgeräte-Kommunikationssystem (1) Folgendes umfasst:
einen Digitalsignal-Empfangsanschluss (11), der elektrisch mit dem Digitalsignal-Sendeanschluss (3a) des Tonbereitstellungsgeräts (3) verbunden ist, um ein Tonsignal von dem Tonbereitstellungsgerät (3) zu empfangen;
ein Funkübertragungsmodul (12) zum Verbinden mit dem Hörgerät (2) über einen drahtlosen Kommunikationspfad; und
ein Verarbeitungsmodul (14), das elektrisch mit dem Digitalsignal-Empfangsanschluss (11) und dem Funkübertragungsmodul (12) verbunden ist, um zu bestimmen, ob das Tonbereitstellungsgerät (3) das Tonsignal bereitstellt, wobei, wenn das Tonbereitstellungsgerät (3) das Tonsignal bereitstellt, das Verarbeitungsmodul (14) das Funkübertragungsmodul (12) steuert, um eine Verbindung mit dem Hörgerät (2) herzustellen; wenn das Verarbeitungsmodul (14) feststellt, dass das Tonbereitstellungsgerät (3) die Bereitstellung des Tonsignals eingestellt hat, steuert das Verarbeitungsmodul (14) das Funkübertragungsmodul (12), um die Verbindung mit dem Hörgerät (2) zu unterbrechen.

2. Hörgeräte-Kommunikationssystem (1) nach Anspruch 1, wobei in dem Fall, dass das Hörgerät (2) kein digitales Tonsignal von dem Tonbereitstellungsgerät (3) empfangen kann, das Verarbeitungsmodul (14) fähig ist, das Funkübertragungsmodul (12) zu steuern, um die Verbindung mit dem Hörgerät (2) zu unterbrechen.

3. Hörgeräte-Kommunikationssystem (1) nach Anspruch 1 oder 2, wobei in dem Fall, dass das Tonbereitstellungsgerät (3) Stille für eine bestimmte Zeitdauer bereitstellt, das Verarbeitungsmodul (14) fähig ist, das Funkübertragungsmodul (12) zu steuern, um die Verbindung mit dem Hörgerät (2) zu unterbrechen.

4. Hörgeräte-Kommunikationssystem (1) nach Anspruch 1 oder einem der Ansprüche 2 bis 3, wobei das Hörgeräte-Kommunikationssystem (1) ferner ein Decodiermodul (13) umfasst, das elektrisch mit dem Digitalsignal-Empfangsanschluss (11) verbunden ist, um das Tonsignal in ein unkomprimiertes digitales Tonsignalformat zu decodieren.

5. Hörgeräte-Kommunikationssystem (1) nach Anspruch 1 oder einem der Ansprüche 2 bis 4, wobei, wenn das Tonbereitstellungsgerät (3) das Tonsignal kontinuierlich bereitstellt, das Verarbeitungsmodul (14) das Funkübertragungsmodul (12) steuert, um die Verbindung mit dem Hörgerät (2) aufrechtzuerhalten.

6. Hörgeräte-Kommunikationssystem (1) nach Anspruch 1 oder einem der Ansprüche 2 bis 5, wobei das Funkübertragungsmodul (12) über ein Bluetooth-Protokoll mit dem Hörgerät (2) verbunden ist.

7. Hörgeräte-Kommunikationssystem (1) nach Anspruch 1 oder einem der Ansprüche 2 bis 6, wobei der Digitalsignal-Empfangsanschluss (11) ein S/PDIF-Anschluss ist.

8. Hörgeräte-Kommunikationsverfahren, das einem Hörgerät (2) gestattet, ein Tonsignal von einem Tonbereitstellungsgerät (3) zu empfangen, wobei das Verfahren Folgendes umfasst:
Bestimmen, ob das Tonbereitstellungsgerät (3) ein Tonsignal bereitstellt;
wenn das Tonbereitstellungsgerät (3) das digitale Tonsignal bereitstellt, Herstellen einer Verbindung mit dem Hörgerät (2);
Empfangen des Tonsignals von dem Tonbereitstellungsgerät (3) zur Übertragung zu dem Hörgerät (2); und
wenn das Tonbereitstellungsgerät (3) die Bereitstellung des Tonsignals einstellt, Unterbrechen der Verbindung mit dem Hörgerät (2).

9. Hörgeräte-Kommunikationsverfahren nach Anspruch 8, wobei der Schritt des Einstellens der Bereitstellung des Tonsignals von dem Tonbereitstellungsgerät (3) ferner Folgendes umfasst:
Bestimmen, dass das Hörgerät (2) kein digitales Tonsignal von dem Tonbereitstellungsgerät (3) empfängt; und Steuern des Funkübertragungsmoduls (12), um die Verbindung mit dem Hörgerät (2) zu unterbrechen.

10. Hörgeräte-Kommunikationsverfahren nach Anspruch 8 oder 9, wobei der Schritt des Einstellens der Bereitstellung des Tonsignals von dem Tonbereitstellungsgerät (3) ferner Folgendes umfasst: Bestimmen, dass das Tonbereitstellungsgerät (3) Stille für eine bestimmte Zeitdauer bereitgestellt hat; und Steuern des Funkübertragungsmoduls (12), um die Verbindung mit dem Hörgerät (2) zu unterbrechen.

11. Hörgeräte-Kommunikationsverfahren nach einem der Ansprüche 8, 9 und 10, das ferner einen Schritt der Decodierung des Tonsignals in ein unkomprimiertes digitales Tonsignalformat umfasst.

12. Hörgeräte-Kommunikationsverfahren nach Anspruch 8, das ferner einen Schritt des Aufrechterhaltens der Verbindung mit dem Hörgerät (2) umfasst, wenn das Tonbereitstellungsgerät (3) das Tonsignal kontinuierlich bereitstellt.

13. Hörgeräte-Kommunikationsverfahren nach Anspruch 8, das ferner einen Schritt des Verbindens mit dem Hörgerät (2) über ein Bluetooth-Protokoll umfasst.

## Revendications

1. Système de communication (1) de prothèse auditive, pour une connexion entre une prothèse auditive (2) et un appareil émetteur de son (3), dans lequel l'appareil émetteur de son (3) a un port (3a) d'émission de signal numérique, le système de communication (1) de prothèse auditive comprenant :
un port (11) de réception de signal numérique, connecté électriquement au port (3a) d'émission de signal numérique de l'appareil émetteur de son (3), pour recevoir un signal sonore en provenance de l'appareil émetteur de son (3) ;
un module de transmission sans fil (12) pour une connexion à la prothèse auditive (2) par l'intermédiaire d'un trajet de communication sans fil ; et
un module de traitement (14), connecté électriquement au port (11) de réception de signal numérique et au module de transmission sans fil (12), pour déterminer si l'appareil émetteur de son (3) est en train de fournir le signal sonore, dans lequel lorsque l'appareil émetteur de son (3) est en train de fournir le signal sonore, le module de traitement (14) commande le module de transmission sans fil (12) pour établir une connexion avec la prothèse auditive (2) ; lorsque le module de traitement (14) détermine que l'appareil émetteur de son (3) a arrêté de fournir le signal sonore, le module de traitement (14) commande le module de transmission sans fil (12) pour interrompre la connexion avec la prothèse auditive (2).

2. Système de communication (1) de prothèse auditive selon la revendication 1, dans lequel dans le cas où la prothèse auditive (2) ne peut pas recevoir un signal sonore numérique en provenance de l'appareil émetteur de son (3) ; le module de traitement (14) est susceptible de commander le module de transmission sans fil (12) pour interrompre la connexion avec la prothèse auditive (2).

3. Système de communication (1) de prothèse auditive selon la revendication 1 ou 2, dans lequel dans le cas où l'appareil émetteur de son (3) est silencieux pendant une durée spécifique ; ainsi, le module de traitement (14) est susceptible de commander le module de transmission sans fil (12) pour interrompre la connexion avec la prothèse auditive (2).

4. Système de communication (1) de prothèse auditive selon la revendication 1 ou l'une quelconque des revendications 2 à 3, le système de communication (1) de prothèse auditive comprenant en outre un module de décodage (13) connecté électriquement au port (11) de réception de signal numérique et permettant de décoder le signal sonore en un format non compressé de signal sonore numérique.

5. Système de communication (1) de prothèse auditive selon la revendication 1 ou l'une quelconque des revendications 2 à 4, dans lequel lorsque l'appareil émetteur de son (3) est en train de fournir le signal sonore en continu, le module de traitement (14) commande le module de transmission sans fil (12) pour conserver la connexion avec la prothèse auditive (2).

6. Système de communication (1) de prothèse auditive selon la revendication 1 ou l'une quelconque des revendications 2 à 5, dans lequel le module de transmission sans fil (12) se connecte à la prothèse auditive (2) par l'intermédiaire d'un protocole Bluetooth.

7. Système de communication (1) de prothèse auditive selon la revendication 1 ou l'une quelconque des revendications 2 à 6, dans lequel le port (11) de réception de signal numérique est un port S/PDIF.

8. Procédé de communication de prothèse auditive, permettant qu'une prothèse auditive (2) reçoive un signal sonore en provenance d'un appareil émetteur de son (3), le procédé consistant à :
déterminer si l'appareil émetteur de son (3) est en train d'émettre un signal sonore ;
lorsque l'appareil émetteur de son (3) est en train d'émettre le signal sonore numérique, établir une connexion avec la prothèse auditive (2) ;
recevoir le signal sonore en provenance de l'appareil émetteur de son (3) pour une transmission à la prothèse auditive (2) ; et
lorsque l'appareil émetteur de son (3) arrête d'émettre le signal sonore, interrompre la connexion avec la prothèse auditive (2).

9. Procédé de communication de prothèse auditive selon la revendication 8, dans lequel l'étape d'interruption de l'émission du signal sonore par l'appareil émetteur de son (3) consiste en outre à :
déterminer que la prothèse auditive (2) n'est pas en train de recevoir un signal sonore numérique en provenance de l'appareil émetteur de son (3) ; et
commander le module de transmission sans fil (12) pour interrompre la connexion avec la prothèse auditive (2).

10. Procédé de communication de prothèse auditive selon la revendication 8 ou 9, dans lequel l'étape d'interruption de l'émission du signal sonore par l'appareil émetteur de son (3) consiste en outre à : déterminer que l'appareil émetteur de son (3) est silencieux pendant une durée spécifique ; et commander le module de transmission sans fil (12) pour interrompre la connexion avec la prothèse auditive (2).

11. Procédé de communication de prothèse auditive selon l'une quelconque des revendications 8, 9 et 10, comprenant en outre une étape de décodage du signal sonore en un format non compressé de signal sonore numérique.

12. Procédé de communication de prothèse auditive selon la revendication 8, comprenant en outre une étape de maintien de la connexion avec la prothèse auditive (2) lorsque l'appareil émetteur de son (3) est en train d'émettre le signal sonore en continu.

13. Procédé de communication de prothèse auditive selon la revendication 8, comprenant en outre une étape de connexion à la prothèse auditive (2) par l'intermédiaire d'un protocole Bluetooth.
